# EUROPÄISCHE PATENTSCHRIFT

(11) **EP 2 142 770 B1**
(45) Veröffentlichungstag und Bekanntmachung des Hinweises auf die Patenterteilung: **15.12.2010**
(21) Anmeldenummer: 07819470.1
(22) Anmeldetag: 31.10.2007
(51) Int. Cl.: F01N 3/20

(54) **INJEKTOR ZUM DOSIEREN VON REDUKTIONSMITTEL**
INJECTOR FOR METERING REDUCING AGENT
INJECTEUR DE DOSAGE D'AGENT DE RÉDUCTION

(30) Priorität: 14.11.2006 DE 102006053556
(43) Veröffentlichungstag der Anmeldung: 13.01.2010
(73) Patentinhaber: Eberspächer Unna GmbH & Co. KG, 59423 Unna (DE)
(72) Erfinder: LUECKING, Christof, 58300 Wetter (DE)
(74) Vertreter: Diehl, Hermann O. Th.
(86) Internationale Anmeldenummer: PCT/EP2007/009436
(87) Internationale Veröffentlichungsnummer: WO 2008/058634

(56) Entgegenhaltungen:
- EP-A- 0 246 220
- DE-A1-102004 048 075
- DE-A1-102004 050 022
- DE-A1-102005 022 562
- US-A1- 2005 235 632
- US-A1- 2006 016 176
- US-B1- 6 203 770

## Beschreibung

Die Erfindung betrifft eine Vorrichtung zum Dosieren von Reduktionsmittel nach dem Oberbegriff des Anspruch 1 und einen Injektor in einer Vorrichtung zum Dosieren von Reduktionsmittel nach dem Oberbegriff des Anspruchs 5.

Es ist bekannt, im Abgas von Dieselbrennkraftmaschinen enthaltene Stickoxide durch selektive katalytische Reduktion zu vermindern. Dazu wird vor einem SCR-Katalysator ein Reduktionsmittel, eine wässrige Harnstofflösung, fein zerstäubt in dosierter Menge in einen Abgastrakt der Dieselbrennkraftmaschine eingespritzt.

Aus der gattungsbildenden Offenlegungsschrift DE 103 32 114 A1 ist eine Vorrichtung zum Dosieren von Reduktionsmittel zum Abgas einer Brennkraftmaschine bekannt. Die Vorrichtung weist einen Injektor auf, dem ein Reduktionsmittel aus einem Vorratsbehälter über eine Zulaufleitung mittels einer Dosierpumpe zugeführt wird. Das Reduktionsmittel kann aus dem Injektor über eine Rücklaufleitung in den Vorratsbehälter zurückströmen. Der Injektor weist eine Einspritzdüse auf, die vorzugsweise als Drosselzapfendüse ausgeführt ist. Die nach innen öffnende, druckgesteuerte Einspritzdüse öffnet bzw. schließt selbstständig in Abhängigkeit des Druckes des Reduktionsmittels. Der Injektor ist einem Abgastrakt zugeordnet, wobei die vom Abgas im Abgastrakt umspülte Einspritzdüse durch das Reduktionsmittel in der Einspritzdüse gekühlt wird. Das Reduktionsmittel führt bei der Abspritzung von Reduktionsmittel und durch die Rückführung von Reduktionsmittel die Wärme der Einspritzdüse aus der Einspritzdüse in den Vorratsbehälter ab, wobei erhitztes Reduktionsmittel durch kühleres Reduktionsmittel in der Einspritzdüse ersetzt wird. Verunreinigungen im Reduktionsmittel und/oder Ablagerungen des Reduktionsmittels können bei derart ausgeführten Vorrichtungen und Injektoren zu unerwünschten Offenstellungen der Einspritzdüse führen. Dokument EP 0 246 220 A1 bezieht sich auf eine Einspritzdüse für Brennkraftmaschinen. Die Einspritzdüse umfasst ein Tellerventil, dessen maximaler Ventilhub durch Kontaktflächen am Ventilschaft und am Ventilgehäuse begrenzt wird.

Dokument DE 10 2004 050 022 A1 bezieht sich auf eine Einrichtung zur Kühlung einer Düse für die dosierte Einspritzung eines Reduktionsmittels in den Abgastrakt einer Brennkraftmaschine.

Es ist eine Aufgabe der Erfindung, einen Injektor zum Dosieren von Reduktionsmittel bereitzustellen, der eine erhöhte Betriebssicherheit gewährleistet.

Diese Aufgabe wird durch den Gegenstand des Anspruchs 1 gelöst bevorzugte Ausführungsformen sind Gegenstand der Unteransprüche.

Der erfindungsgemäße Injecktor mit den kennzeichnenden Merkmalen des Anspruchs 1 und anbringbar in einer Vorrichtung zum Dosieren von Reduktionsmittel hat den Vorteil, dass mit einem ersten Filterelement das in die Einspritzdüse strömende Reduktionsmittel gefiltert werden kann, wobei das Filterelement platzsparend in einem Zulauf des Injektors verbaut ist.

Vorteilhafterweise ermöglicht das erste Filterelement im Injektor, Verunreinigungen im Reduktionsmittel vor dem Durchströmen der Einspritzdüse aufzufangen, so dass ein Verstopfen oder eine unerwünschte Offenstellung der Einspritzdüse vermieden werden kann, wodurch die Zuverlässigkeit der Vorrichtung zum Dosieren von Reduktionsmittel bzw. des Injektors in der Vorrichtung zum Dosieren von Reduktionsmittel gesteigert werden kann.

Durch die in den Unteransprüchen aufgeführten Maßnahmen sind vorteilhafte Weiterbildungen und Verbesserungen der im Anspruch 1 angegebenen Injektors möglich, der in einer Vorrichtung zum Dosieren von Reduktionsmittel anbringbar ist.

Zur Verbesserung der konstruktiven Ausführung der Vorrichtung und des Injektors bezüglich des Schutzes der Einspritzdüse vor Verunreinigungen ist gemäß der Erfindung in einem Rücklauf des Injektors ein zweites Filterelement verbaut. Vorteilhaft ist dabei, dass Verunreinigungen des Reduktionsmittels, die nach dem ersten Filterelement auftreten bzw. entstehen können, mit dem aus der Einspritzdüse rückströmenden Reduktionsmittel ins zweite Filterelement gelangen und aufgefangen werden, so dass gefiltertes Reduktionsmittel aus dem Injektor in den Vorratsbehälter rückgeführt werden kann, wodurch die Betriebssicherheit der Vorrichtung zum Dosieren von Reduktionsmittel und des Injektors in einer Vorrichtung zum Dosieren von Reduktionsmittel weiter gesteigert werden kann.

Zur weiteren Verbesserung der konstruktiven Ausführung der Vorrichtung und des Injektors bezüglich des Schutzes der Einspritzdüse vor Verstopfen und unerwünschter Offenstellung weist die Einspritzdüse ein nach außen öffnendes Ventilelement auf. Vorteilhafterweise werden Verunreinigungen des Reduktionsmittels beim Abspritzen des Reduktionsmittels aus dem Ventilelement herausgespült und ein selbstreinigender Effekt erzielt.

Zur weiteren Verbesserung der konstruktiven Ausführung der Vorrichtung und des Injektors bezüglich des Schutzes der Einspritzdüse vor Ablagerungen aus dem Reduktionsmittel liegt ein zum Öffnen der Einspritzdüse vorgesehener Öffnungsdruck des Ventilelements über einem Siededruck des Reduktionsmittels. Vorteilhafterweise wird durch den hohen Öffnungsdruck ein Sieden des Reduktionsmittels in der Einspritzdüse verhindert, so dass Abscheiden von Harnstoff aus dem Reduktionsmittel, einer wässrigen Harnstofflösung, vermieden werden kann, wodurch Ablagerungen aus Harnstoff in der Einspritzdüse vermieden werden können. Des Weiteren werden mittels des hohen Öffnungsdrucks bei der Abspritzung hohe Strömungsgeschwindigkeiten des Reduktionsmittels in der Einspritzdüse erreicht, so dass vorhandene Verunreinigungen und/oder Ablagerungen vom Reduktionsmittel mitgerissen und aus der Einspritzdüse bzw. dem Ventilelement sicher herausgespült werden, wodurch ein Verstopfen oder eine unerwünschte Offenstellung der Einspritzdüse vermieden werden kann.

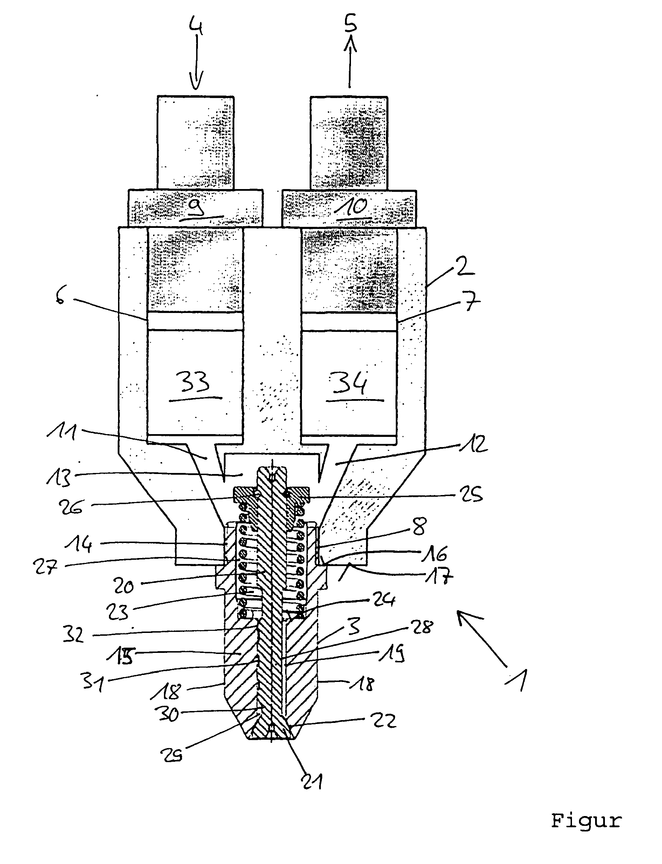

Weitere Merkmale und Merkmalskombinationen ergeben sich aus der Beschreibung sowie der Zeichnung. Ein Ausführungsbeispiel der Erfindung ist in der Zeichnung vereinfacht dargestellt und in der nachfolgenden Beschreibung näher erläutert.

Die Zeichnung zeigt eine schematisch vereinfachte Schnittdarstellung eines Ausführungsbeispiels einer Vorrichtung zum Dosieren von Reduktionsmittel bzw. eines Injektors in der Vorrichtung zum Dosieren von Reduktionsmittel.

In der Zeichnung ist ein Ausschnitt einer Vorrichtung zum Dosieren von Reduktionsmittel dargestellt, der einen Injektor 1 in einem Längsschnitt zeigt. Der Injektor 1 weist einen Düsenhalter 2 mit einer am Düsenhalter 2 angebrachten Einspritzdüse 3 auf. Die Vorrichtung zum Dosieren von Reduktionsmittel, insbesondere einer wässrigen Harnstofflösung, in einen nicht gezeigten Abgastrakt einer Brennkraftmaschine, insbesondere einer Dieselbrennkraftmaschine, umfasst den dem Abgastrakt zugeordneten Injektor 1, dem das Reduktionsmittel aus einem nicht gezeigten Vorratsbehälter über eine nicht näher dargestellte Zulaufleitung 4 mittels einer nicht gezeigten Dosierpumpe zugeführt wird. Das Reduktionsmittel gelangt über den Düsenhalter 2 zur Einspritzdüse 3. Das Reduktionsmittel kann aus dem Injektor 1 über eine nicht näher dargestellte Rücklaufleitung 5 in den Vorratsbehälter zurückströmen, so dass die Einspritzdüse von Reduktionsmittel durchströmt werden kann, um so die zumindest teilweise in den Abgastrakt ragende und vom Abgas umspülte Einspritzdüse 3 zu kühlen.

Die federbelastete Einspritzdüse 3 öffnet bzw. schließt selbsttätig in Abhängigkeit vom Druck des Reduktionsmittels. Der Druck des Reduktionsmittels im Injektor 1 kann über ein nicht gezeigtes, in der Rücklaufleitung 5 eingebautes, Rücklaufventil gesteuert werden, indem zur Drucksteigerung des Reduktionsmittels in der Einspritzdüse 3 das Rücklaufventil geschlossen wird. Übersteigt der Druck des Reduktionsmittels einen Öffnungsdruck der Einspritzdüse 3, so öffnet die in den Abgastrakt ragende Einspritzdüse 3 und es wird Reduktionsmittel ins Abgas des Abgasstrangs der Brennkraftmaschine abgespritzt. Das Reduktionsmittel gelangt mit dem Abgas zu einem nicht gezeigten Stickoxidreduktionskatalysator, der vorzugsweise als sogenannter SCR-Katalysator zur selektiven Reduktion von im Abgas des Dieselmotors enthaltenen Stickoxiden (NOx) ausgeführt ist.

Der Düsenhalter 2 weist einen Zulauf 6, einen Rücklauf 7 und eine Aufnahmeöffnung 8 für die Einspritzdüse 3 auf. Der Zulauf 6 und der Rücklauf 7 sind vorzugsweise als Bohrungen ausgeführt. Im Zulauf 6 und im Rücklauf 7 sind jeweils ein Zulaufstutzen 9 und ein Rücklaufstutzen 10 flüssigkeitsdicht eingesetzt. An den Zulauf- bzw. Rücklaufstutzen 9, 10 sind jeweils die Zulauf- bzw. Rücklaufleitungen 4, 5 der Vorrichtung zum Dosieren von Reduktionsmittel angeschlossen. Die Zulauf- bzw. Rücklaufstutzen 9, 10 werden in den Zulauf 6 bzw. Rücklauf 7 verpresst oder mittels nicht gezeigter Gewinde eingeschraubt. In der Zeichnung sind der Zulaufstutzen 9 und der Rücklaufstutzen 10 nebeneinander auf der der Einspritzdüse 3 abgewandten Seite am Düsenhalter 2 montiert. Selbstverständlich können der Zulaufstutzen 9 und der Rücklaufstutzen 10 in anderen Positionen zueinander und/oder zum Düsenhalter 2 bzw. zur Einspritzdüse 3 vorgesehen werden. Der Zulauf 6 und der Rücklauf 7 sind jeweils über einen Zulauf- bzw. Rücklaufkanal 11, 12 mit einem Düsenraum 13 verbunden. In den Düsenraum 13 mündet auch die Aufnahmeöffnung 8, wobei in der Aufnahmeöffnung 8 die Einspritzdüse 3 flüssigkeitsdicht aufgenommen ist. Vorzugsweise ist die Einspritzdüse 3 mittels eines Gewindes 14 mit dem Düsenhalter 2 verschraubt.

Das Gewinde 14 ist an einem Düsenkörper 15 der Einspritzdüse 3 vorgesehen. Das Gewinde 14 weist einen kleineren Durchmesser als der Düsenkörper 15 auf, so dass ein umlaufender Bund 16 gegeben ist, der zwischen dem Gewinde 14 und dem Düsenkörper 15 an einer Stirnfläche 17 des Düsenhalters 2 anliegt. Der Injektor 1 ist an seiner Stirnfläche 17 mittels einer geeigneten Flanschverbindung mit dem Abgastrakt der Brennkraftmaschine verbunden, wobei die Einspritzdüse 3 zumindest teilweise in den Abgastrakt hineinragt und von Abgas umspült wird. Am zylinderförmigen Düsenkörper 15 sind zwei gegenüberliegende, parallele Abflachungen 18 zum Montieren der Einspritzdüse 3 an dem Düsenhalter 2 vorgesehen. Das abgasseitige Ende des Düsenkörpers 15 verjüngt sich kegelförmig. In einer im Düsenkörper 15 vorgesehenen Ventilbohrung 19 ist ein Ventilelement 20 längsverschiebbar aufgenommen. Die Ventilbohrung 19 erweitert sich zum abgasseitigen Ende des Düsenkörpers 15 hin kegelförmig und bildet zusammen mit einem Ventilteller 21 des Ventilelements 20 einen Dichtsitz 22. Der Ventilteller 21 wird mittels einer Düsenfeder 23 in seinen Dichtsitz 22 gedrückt. In der Zeichnung ist das Ventilelement 20 in seiner Schließstellung dargestellt. Die Düsenfeder 23 stützt sich an einem dem Düsenraum 13 zugewandten Widerlager 24 am Düsenkörper 15 ab und ist mittels eines am Ventilelement 20 angebrachten Federtellers 25 vorgespannt. Eine geeignete Keilverbindung, insbesondere in Form eines Sprengrings 26, hält den Federteller 25 am Ventilelement 20. In der Zeichnung ist der Boden eines Sacklochs im Düsenkörper 15 als Widerlager 24 vorgesehen, wobei die Düsenfeder 23 zumindest teilweise in der vom Sackloch gebildeten Federkammer 27 aufgenommen ist, wodurch Baulänge der Einspritzdüse 3 eingespart werden kann.

Das Reduktionsmittel gelangt aus dem Düsenraum 13 über die Federkammer 27 zur Ventilbohrung 19 und strömt in mindestens einer im Ventilelement 20 ausgesparten Längsnut 28 durch die Ventilbohrung 19 in einen dem Ventilteller 21 vorgelagerten Ringraum 29. Eine umlaufende Quernut 30 am Ventilelement 20 bildet den Ringraum 29. Das Ventilelement 22 kann im Bereich der Ventilbohrung 19 mehrere umlaufende Einstiche 31 aufweisen, so dass das Ventilelement 20 Erhebungen 32 zwischen dem Ringraum 29, den Einstichen 31 und der mindestens einen Längsnut 28 aufweist, wodurch das Ventilelement 20 nur über die Erhebungen 32 an der Ventilbohrung 19 anliegt und geführt wird. Vorteilhafterweise sind der Ringraum 29 und die Einstiche 31 über die mindestens eine Längsnut 28 mit dem Düsenraum 13 verbunden, so dass Reduktionsmittel über die Längsnut 28 in den Ringraum 29 und die umlaufenden Einstiche 31 strömen kann, wodurch die Reibung zwischen dem Ventilelement 20 und der Ventilbohrung 19 vermindert werden kann und die Kühlung des Ventilelements 20 verbessert werden kann.

Verunreinigungen in Form von Partikeln können sowohl in der Vorrichtung zum Dosieren von Reduktionsmittel selbst auftreten oder auch im Reduktionsmittel enthalten sein. Die Verunreinigungen können zum Verstopfen bzw. zu einer unerwünschten Offenstellung der Einspritzdüse 3 führen. Um einen störungsfreien Betrieb der Vorrichtung zum Dosieren von Reduktionsmittel sicherzustellen, ist es erfindungsgemäß vorgesehen, im Zulauf 6 des Injektors 1 ein erstes Filterelement 33 in Form eines Sieb- oder Spaltfilters vorzusehen. Es ist auch denkbar, den Sieb- oder Spaltfilter mit einem Filtermedium, wie Zellstoff und/oder Polyesterfasern oder dergleichen, zu kombinieren. Dabei wird das Filterelement 33 platzsparend im Zulauf 6 zwischen dem Zulaufstutzen 9 und dem Zulaufkanal 11 eingesetzt. Vorzugsweise weist das Filterelement 33 und der Zulauf 6 eine Überdeckung auf, so dass eine Übergangs- bzw. Presspassung zwischen dem Filterelement 33 und dem Zulauf 6 vorliegt, wodurch das erste Filterelement 33 einfach eingesetzt und montiert werden kann. Mit dem ersten Filterelement 33 werden Verunreinigungen aufgefangen, die mit dem Reduktionsmittel zur Einspritzdüse 3 strömen. Das gefilterte Reduktionsmittel enthält keine oder lediglich nur so große Verunreinigungen, die problemlos aus der Einspritzdüse 3 herausgespült werden können, was ein Verstopfen bzw. eine unerwünschte Offenstellung der Einspritzdüse verhindert. Des Weiteren kann analog zum Zulauf 6 im Rücklauf 7 ein zweites Filterelement 34 vorgesehen sein, welches Verunreinigungen des im Düsenraum 13 vorliegenden Reduktionsmittels im zweiten Filterelement 34 auffängt. Vorteilhafterweise gelangen Verunreinigungen aus dem Düsenraum 13 nicht zurück in den Vorratsbehälter des Reduktionsmittels, so dass das Reduktionsmittel in dem Vorratsbehälter keine Verunreinigung erfährt. Von Vorteil ist auch, dass die Einspritzdüse 3 ein nach außen öffnendes Ventilelement 20 aufweist, so dass Verunreinigungen beim Abspritzen von Reduktionsmittel aus der zumindest einen Längsnut 28 und dem Dichtsitz 22 mitgerissen werden, wodurch ein selbstreinigender Effekt gegeben ist.

Die Einspritzdüse 3 ragt im verbauten Zustand zumindest teilweise in den Abgastrakt hinein und wird dort von heißem Abgas umspült. Das Reduktionsmittel in der Einspritzdüse 3 nimmt die Wärme auf und führt die Wärme bei der Abspritzung von Reduktionsmittel in das Abgas und durch die Durchströmung der Einspritzdüse 3 in den Vorratsbehälter aus der Einspritzdüse 3 ab. Trotz des vorliegenden Abtransports der Wärme aus der Einspritzdüse kann es zu einem Sieden des Reduktionsmittels in der Einspritzdüse 3 kommen. Dabei kann der Wasseranteil des Reduktionsmittels, eine wässrige Harnstofflösung, verdampfen, wodurch Ablagerungen aus dem im Wasser gelösten Harnstoff entstehen, die sich dann in der Einspritzdüse 3 ablagern. Vorteilhafterweise lässt sich das Sieden des Reduktionsmittels durch einen Öffnungsdruck der selbstöffnenden Einspritzdüse 3, der über einem Siededruck des Reduktionsmittels liegt, vermeiden. Vorzugsweise liegt der Öffnungsdruck der Einspritzdüse 3 bei einem Druck von mindestens 10 bar, wodurch das Sieden des Reduktionsmittels bis zu einer Temperatur von etwa 180°C vermieden werden kann.
Des Weiteren führt der hohe Öffnungsdruck des Reduktionsmittels bei der Abspritzung zu hohen Strömungsgeschwindigkeiten des Reduktionsmittels in der Einspritzdüse 3, so dass Verunreinigungen und/oder Ablagerungen vom austretendem Reduktionsmittel mitgerissen werden und aus der Einspritzdüse 3 herausgespült werden.

Der erfindungsgemäße Injektor zum Dosieren von Reduktionsmittel weist einen einfach aufgebauten und kompakten Injektor 1 auf, der durch die Filterung des Reduktionsmittels und die Kühlung der Einspritzdüse 3 eine besonders hohe Betriebssicherheit aufweist.

## Patentansprüche

1. Injektor (1) zum Dosieren von Reduktionsmittel, der das Reduktionsmittel, insbesondere eine wässrige Harnstofflösung, in einen Abgastrakt einer Brennkraftmaschine, insbesondere einer Dieselbrennkraftmaschine, abgibt und dem das Reduktionsmittel aus einem Vorratsbehälter über eine Zulaufleitung (4) mittels einer Dosierpumpe zuführbar ist und über eine Rücklaufleitung (5) in den Vorratsbehälter rückführbar ist, wobei eine federbelastete Einspritzdüse (3) des Injektors (1) sich selbsttätig durch den Druck des Reduktionsmittels öffnen kann und das Reduktionsmittel in den Abgastrakt abspritzt, wobei in einem Zulauf (6) des Injektors (1) ein erstes Filterelement (33) verbaut ist,
**dadurch gekennzeichnet, dass**
in einem Rücklauf (7) des Injektors (1) ein zweites Filterelement (34) verbaut ist.

2. Injektor nach Anspruch 1, **dadurch gekennzeichnet, dass** die Einspritzdüse (3) ein nach außen öffnendes Ventilelement (20) aufweist.

3. Injektor nach Anspruch 1 oder 2, **dadurch gekennzeichnet, dass** ein zum Öffnen der Einspritzdüse (3) vorgesehener Öffnungsdruck des Ventilelements (20) über einem Siededruck des Reduktionsmittels liegt.

## Claims

1. A injector (1) for metering a reducing agent, which outputs the reducing agent, in particular an aqueous urea solution, into an exhaust gas section of an internal combustion engine, in particular of a diesel internal combustion engine, and to which the reducing agent can be fed from a storage container via a feed line (4) by means of a metering pump and can be fed back into the storage container via a return line (5), wherein a spring-loaded injection nozzle (3) of the injector (1) can open itself automatically by the pressure exerted by the reducing agent and injects the reducing agent into the exhaust gas section, wherein a first filter element (33) is built into a feed (6) of the injector (1),
**characterized in that**
a second filter element (34) is built into a return (7) of the injector (1).

2. The injector according to claim 1, **characterized in that** the injection nozzle (3) has an outwardly opening valve element (20).

3. The injector according to claim 1 or 2, **characterized in that** an opening pressure, which is provided for opening the injection nozzle (3), of the valve element (20) is above a boiling pressure of the reducing agent.

## Revendications

1. Injecteur (1) destiné au dosage d'agents réducteurs, qui distribue l'agent réducteur, en particulier une solution aqueuse d'urée, dans l'unité des gaz d'échappement d'un moteur à combustion interne, en particulier d'un moteur diesel, dans lequel l'agent réducteur peut être amené depuis un réservoir de réserve via une conduite d'amenée (4) au moyen d'une pompe de dosage et peut être recyclé dans le réservoir de réserve par le biais d'une conduite de retour (5), où une buse d'injection contrainte par ressort (3) de l'injecteur (1) peut s'ouvrir automatiquement par la pression de l'agent réducteur et l'agent réducteur être injecté dans l'unité des gaz d'échappement, un premier élément filtrant (33) étant monté dans une entrée (6) de l'injecteur (1),
**caractérisé en ce que** dans une conduite de retour (7) de l'injecteur (1) est monté un second élément filtrant (34).

2. Injecteur selon la revendication 1, **caractérisé en ce que** la buse d'injection (3) présente un élément à soupape (20) qui s'ouvre vers l'extérieur.

3. Injecteur selon la revendication 1 ou 2, **caractérisé en ce qu'**une pression d'ouverture de l'élément à soupape (20), prévue pour ouvrir la buse d'injection (3), est supérieure à une pression d'ébullition de l'agent réducteur.
